# EUROPEAN PATENT APPLICATION

(11) **EP 4 546 584 A2**
(43) Date of publication of application: **30.04.2025**
(21) Application number: 24208519.9
(22) Date of filing: 24.10.2024
(51) Int. Cl.: H02G 3/12

(54) **MOUNTING BRACKET FOR ELECTRICAL COMPONENTS**

(30) Priority: 24.10.2023 US 202363592786 P
(71) Applicant: Erico International Corporation, Solon, OH 44139 (US)
(72) Inventor: Anderson, Scott, Garrettsville, 44231 (US); Bukowski, James, Akron, 44333 (US)
(74) Representative: Barker Brettell LLP

(57) **Abstract**

A mounting bracket (100) for supporting an electrical component between structural supports may include a first support rail (102) with a first recessed channel (112) and a second support rail (104) with a second recessed channel (142). The first and second support rails (102, 104) may be nested together for telescopic adjustment along a lateral direction, with the first recessed channel (112) nested within the second recessed channel (142). One of the first support rail (102) or the second support rail (104) may have centering tabs (130, 134) that extend to biasingly engage the other of the first or second support rails (102, 104) to maintain alignment of the first and second support rails (102, 104) with respect to each other, transverse to the lateral direction.

## Description

### BACKGROUND

In many applications, it may be useful to support electrical equipment (e.g., conduit, boxes, fittings, and other components) between structural members (e.g., wall studs). For example, according to some construction standards, electrical equipment may be required to be supported at particular heights above a floor or at particular distances from certain other structures or components.

### SUMMARY OF THE INVENTION

Some examples provide an electrical assembly for coupling to a set of adjacent structural supports. The electrical assembly may include a mounting bracket that may include support rails, including a first support rail and a second support rail slidably received within the first support rail. The first support rail may include a first rail guide and a second rail guide, and a first recessed channel extending into a front side of the first support rail between the first rail guide and the second rail guide. The second support rail may include a third rail guide nested within the first rail guide and a fourth rail guide nested within the second rail guide, and a second recessed channel extending into a front side of the second support rail between the third rail guide and the fourth rail guide, with the first recessed channel nested within the second recessed channel. The electrical assembly may include an electrical box may having a rear wall. The electrical box may be secured at the front side of the first support rail with the rear wall of the electrical box deformed into the first and second recessed channels.

Some examples provide a mounting bracket for supporting an electrical component between structural supports. The mounting bracket may include a first support rail with a first recessed channel and a second support rail with a second recessed channel. The first and second support rails may be nested together for telescopic adjustment along a lateral direction, with the first recessed channel nested within the second recessed channel. One of the first support rail or the second support rail may have centering tabs that extend to biasingly engage the other of the first or second support rails to maintain alignment of the first and second support rails with respect to each other, transverse to the lateral direction.

Some examples provide a mounting bracket for supporting an electrical component between structural supports. The mounting bracket may include a first support rail with a first recessed channel and a second support rail with a second recessed channel. The first and second support rails may be nested together for telescopic adjustment along a lateral direction, with the first recessed channel nested within the second recessed channel. The first recessed channel can be nested within the second recessed channel to receive a rear wall of the electrical box into the first and second recessed channels to secure the electrical box against rotation (e.g., as deformed into the first and second recessed channels by a fastener that extends through the rear wall in alignment with the first and second recessed channels).

In some examples, a gap may be defined between the first and second support rails transverse to the lateral direction, with the centering tabs providing the only points of contact between the first and second support rails across the gap. The centering tabs may bridge the gap to slidably engage the other of the first or second support rails.

In some examples, the first support rail may include a first rail guide and a second rail guide, and the first recessed channel may extend between the first rail guide and the second rail guide. The second support rail may include a third rail guide nested within the first rail guide and a fourth rail guide nested within the second rail guide, and the second recessed channel may extend between the third rail guide and the fourth rail guide.

In some examples, the first and second rail guides may include the centering tabs extending toward the third and fourth rail guides, respectively. At least one of the centering tabs may extend from the first rail guide to bear against the third rail guide and at least one of the centering tabs may extend from the second rail guide to bear against the fourth rail guide to bias the first and second support rails toward a centered orientation. The centering tabs may be integrally formed with the first support rail.

In some examples, the first recessed channel may include a first rear wall, the second recessed channel may include a second rear wall, and mounting holes may be arrayed along the first and second rear walls.

In some examples, the mounting holes of the first and second recessed channels may be selectively alignable by telescopic movement of the first and second support rails to cooperatively receive fasteners that secure electrical components to the mounting bracket.

In some examples, the first support rail mounting holes may be spaced along the first rear wall with a first spacing between adjacent first support rail mounting holes, and the second support rail mounting holes may be spaced along the second rear wall with a second spacing between adjacent second support rail mounting holes that may be equal to the first spacing.

In some examples, a structure mount may extend in a respective distal direction from a distal end of each of the first and second support rails to secure the mounting bracket to a corresponding support structure.

In some examples, a mounting tab may extend from each of the structure mounts, opposite the respective distal direction, to receive a fastener to further secure the structure mount to a closed side of the corresponding structural support.

In some examples, each of the structure mounts may include sets of reliefs at which the structure mounts may be bendable to set an offset of the corresponding first or second support rail from a front face of the corresponding structural support. The reliefs may define bend lines, the bend lines corresponding to predetermined mounting distances from a front face of a first of the adjacent structural supports.

Some examples provide an electrical assembly comprising a mounting bracket as described above and an electrical box having a rear wall and being secured at a front side of the first support rail with the rear wall of the electrical box deformed into the first and second recessed channels to secure the electrical box at the front side of the first support rail. The rear wall of the electrical box may be deformed into the first and second recessed channels by one or more fasteners that extend through one or more aligned set of the first and second support rail mounting holes to secure the electrical box to the mounting bracket.

Some examples provide a method of supporting an electrical component. The method may include telescopically adjusting a mounting bracket in a lateral direction, with a first recessed channel of a first support rail of the mounting bracket slidably nested within a second recessed channel of a second support rail of the mounting bracket. The method may include securing the telescopically adjusted mounting bracket to a building structure, with the first support rail secured to a first structural support and the second support rail secured to a second structural support. The method may include fastening an electrical component to the first and second support rails with a fastener so that the fastener deforms the electrical component into the first recessed channel to resist rotation of the electrical component relative to the mounting bracket.

In some examples, centering tabs of the first or second support rail may biasingly engage the other of the first or second support rail to maintain alignment of the first and second support rails with respect to each other, transverse to the lateral direction.

In some examples, the electrical component may be an electrical box, and a rear wall of the electrical box may be deformed by multiple fasteners into the first and second recessed channels.

In some examples, securing the first support rail to the first structural support may include bending the first support rail to extend a structure mount of the first support rail in a first direction along the first structural support, with a mounting tab extending from the structure mount in a second direction along the first structural support, and securing the structure mount to the first structural support. The first structural mount may be a building stud, and securing the first support rail to the first structural support may further include inserting a fastener through the mounting tab to engage a closed side of the building stud.

Features which are described in the context of separate aspects and/or embodiments of the invention may be used together and/or be interchangeable wherever possible. Similarly, where features are, for brevity, described in the context of a single embodiment, those features may also be provided separately or in any suitable sub- combination. Features described in connection with the mounting bracket or electrical assembly may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate examples of the disclosed technology and, together with the description, serve to explain the principles of examples of the disclosed technology:
FIG. 1 is a front top left isometric view of a mounting bracket according to an example of the disclosed technology;
FIG. 2 is a rear bottom right isometric view of the mounting bracket of FIG. 1;
FIG. 3 is a front elevation view of the mounting bracket of FIG. 1;
FIG. 4 is a top plan view of the mounting bracket of FIG. 1;
FIG. 5 is a rear top left isometric exploded view of the mounting bracket of FIG. 1;
FIG. 6 is a cross-sectional view of the mounting bracket taken along line 6-6 of FIG. 3;
FIG. 7 is a front isometric view of an electrical junction box installed on the mounting bracket of FIG. 1 according to an example of the disclosed technology;
FIG. 8 is a left side elevation view of the electrical box and mounting bracket of FIG. 7;
FIG. 9 is a left side elevation view of the electrical box and mounting bracket of FIG. 7;
FIG. 10 is a front top right perspective view of the mounting bracket of FIG. 1 extending between adjacent structural members according an example of the disclosed technology; and
FIG. 11 is a front top left perspective view of the mounting bracket of FIG. 1 secured on one end to a structural member according to an example of the disclosed technology.

### DETAILED DESCRIPTION

The following discussion is presented to enable a person skilled in the art to make and use examples of the disclosed technology. Various modifications to the illustrated examples will be readily apparent to those skilled in the art, and the generic principles herein can be applied to other examples and applications without departing from examples of the disclosed technology. Thus, examples of the disclosed technology are not intended to be limited to examples shown, but are to be accorded the widest scope consistent with the principles and features disclosed herein. The following detailed description is to be read with reference to the figures, in which like elements in different figures have like reference numerals. The figures, which are not necessarily to scale, depict selected examples and are not intended to limit the scope of examples of the disclosed technology. Skilled artisans will recognize the examples provided herein have many useful alternatives and fall within the scope of examples of the disclosed technology.

As noted above, in some contexts, it may be useful to secure electrical components (e.g., conduit or electrical components) to structural members (e.g., wall studs) of a structure. Examples of the disclosed technology can be useful for this purpose, and others. For example, examples of the disclosed technology can be used to support one or more of electrical conduits, electrical junction boxes, or other electrical components on a mounting bracket at a configurable distance away from structural members (e.g., in a space between adjacent studs). Some examples can additionally (or alternatively) include structures for improved engagement between a mounting bracket and a supported electrical component.

In some examples, a mounting bracket can include a first support rail with a recessed channel in a mounting section. The recessed channel, in some cases, can be configured to be received and translatable within a corresponding recessed channel in a mounting section of a second support rail. The recessed channels of the first and second support rail can define a respective space between a contact surface of the mounting bracket and a rear wall of the recessed channel.

In some examples, a mounting bracket can have a plurality of centering tabs extending inward from a first rail guide and a second rail guide of the first support rail configured to contact the corresponding first and second rail guide of the second support rail to center the second support rail within the first support rail. In other examples, the plurality of centering tabs may extend outward from the first rail guide and the second rail guide of the second support rail configured to contact the corresponding first and second rail guide of the first support rail to center the second support rail within the first support rail.

In some examples, a mounting bracket can include a mounting tab on the structure mounts of the first and second support rails configured to receive a fastener to secure the mounting bracket to a closed side of a structural member (e.g., at a location that is closer to a support plane defined by rails of the mounting bracket than to a front plane of a stud to which the mounting bracket is attached).

In some conventional arrangements, an electrical box is secured to a flat mounting surface of a mounting bracket with a fastener extending through a hole in the back wall of the electrical box into a hole in the flat mounting surface. The fastener may not be capable of providing a quality securement of the electrical box to the mounting bracket because, for example, the face-to-face arrangement of the back wall of the electrical box and the flat mounting surface of the mounting bracket does not allow the threads of the fastener (e.g., a lack of threads adjacent the head of the fastener) to engage adequately with the hole in the flat mounting surface. This can lead to a loose electrical box mounting, for example, if the box is bumped or twisted because the limited thread engagement with the hole in the flat mounting surface is less stable.

Some examples of the disclosed technology can address this issue, or others. For example, some examples of the disclosed technology are presented below in the context of mounting brackets for electrical components, wherein the mounting brackets have recessed channels that are configured to space a rear wall of the channels from a contact surface of the mounting bracket. The contact surface contacts, for example, a back wall of an electrical box to support the electrical box in a mounted configuration. Further, in such a configuration, the spaced arrangement of the rear wall of the channel can allow for threads of the fastener to engage more fully with a hole in the rear wall of the recessed channel. In some examples, securing the fastener can induce a locking force by deformation of the back wall of the electrical box and thereby further encourage engagement of the threads of the fastener with the rear wall of the mounting bracket and resist rotation of the box relative to the bracket.

In some examples below, between-stud brackets are presented in particular. Generally, however, the principles disclosed herein can be used with any variety of mounting brackets, including stud-mounted brackets, floor-supported brackets, between-stud brackets, and so on, and can be used to secure any variety of components in place (e.g., electrical boxes or other electrical assemblies or devices).

With regard to construction, examples of a mounting bracket as presented below can be readily formed as an integral stamping, with mechanical or other (e.g., welded, fastened, adhesive-based, etc.) attachment of other components, as needed. In other examples, however, other manufacturing techniques can be used, including extrusion, additive manufacturing, casting, and so on.

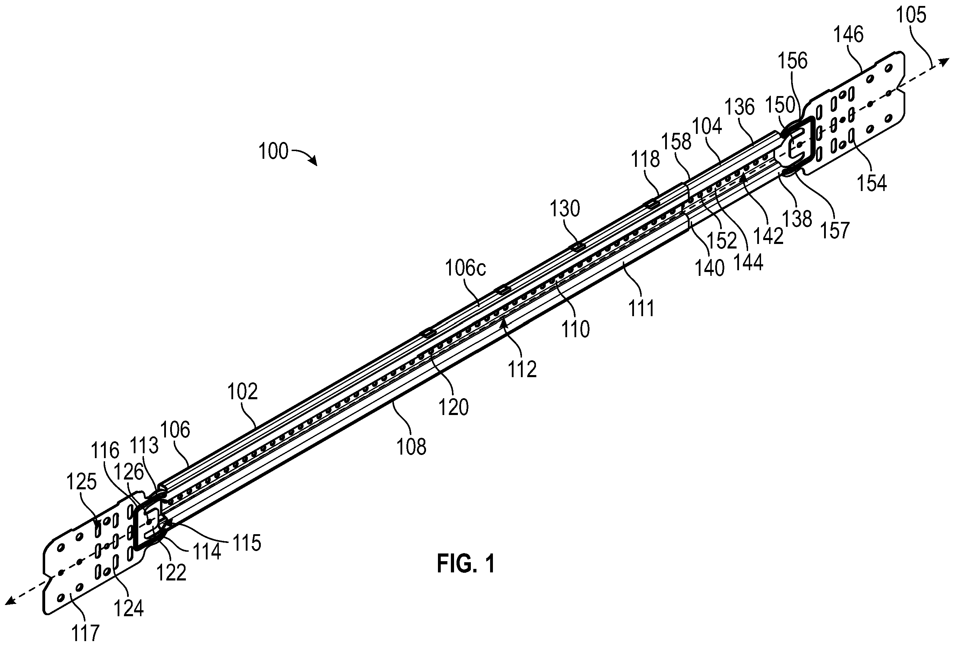

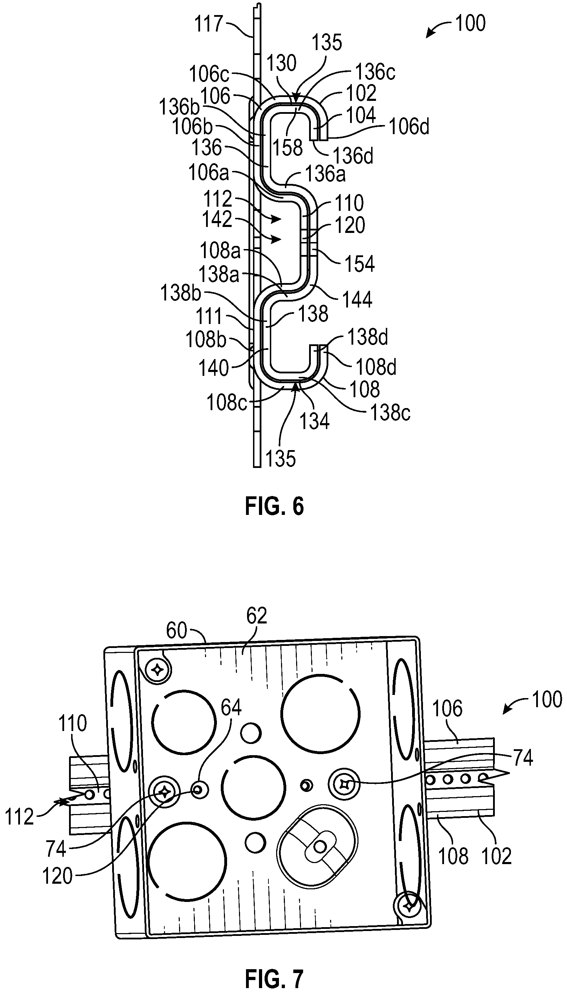

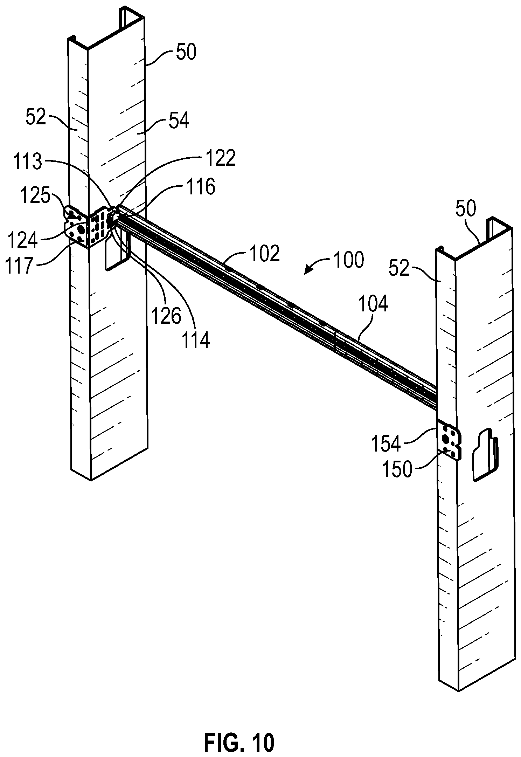

FIGS. 1 through 6 illustrate an example of a mounting bracket 100 configured to be mounted to adjacent structural members (e.g., extend horizontally between and be secured to structural supports such as wall framing studs, e.g., wall studs 50 shown in FIG. 10) and to support electrical components (e.g., an electrical junction box 60 shown in FIGS. 7 through 9). As illustrated, the mounting bracket 100 is formed as a stamping from a single blank of material (e.g., 23 gauge mild steel), although a variety of other approaches are possible. In the illustrated example, the mounting bracket 100 includes a first support rail 102 and a second support rail 104. The second support rail 104 is configured to be slidably received within and slidably movable with respect to the first support rail 102. As such, the first support rail 102 may be slidably adjustable relative to the second support rail 104 along an adjustment axis 105 in a first direction, and a second direction opposite the first direction, to adjust an extension of the mounting bracket 100.

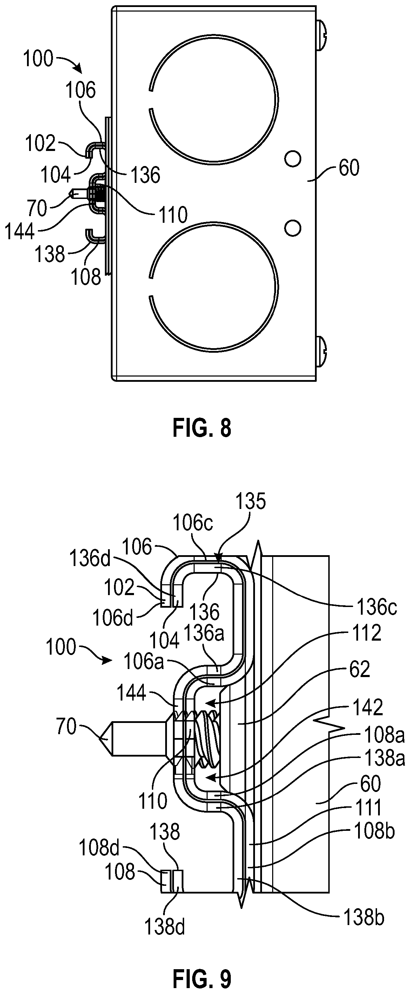

The first support rail 102 contains features for attaching to a structural support (see e.g., wall stud 50 in FIG. 10) and also engagement with the second support rail 104. The first support rail 102 includes a first rail guide 106, a second rail guide 108, and a rear wall 110 that connects the first and second rail guides 106, 108. In some examples, a mounting section 111 may extend between the first and second rail guides 106, 108 (e.g., forming an inner portion of each of the first and second rail guides 106, 108, as shown). In some examples, the mounting section 111 may secure the electrical junction box 60 to the mounting bracket 100, e.g., with the electrical junction box 60 seated in contact with the mounting section 111 (as shown in FIG. 9).

As illustrated in the cross-section of FIG. 6, the first rail guide 106 of the first support rail 102 extends from the rear wall 110. The first rail guide 106 may generally define a C-shaped cross-sectional shape (i.e., a shape that extends to enclose a central space at at least three sides thereof, while leaving an opening along at least one side of the central space for lateral entry thereto). For example, the first rail guide 106 may include a first support section 106a extending from the rear wall 110 in a third direction (e.g., a forward direction) that is substantially perpendicular to the first direction and to the rear wall 110. The first rail guide 106 may further include a second support section 106b extending substantially perpendicular to the first support section 106a, and extending substantially parallel to the rear wall 110. A third support section 106c may extend from the second support section 106b, opposite the first support section 106a, in a fourth direction (e.g., a rearward direction), that is opposite the third direction. Furthermore, a fourth support section 106d may extend from the third support section 106c, opposite the second support section 106b, in a direction that is substantially parallel to the second support section 106b and toward the first support section 106a.

As illustrated in FIG. 6, similar to the first rail guide 106, the second rail guide 108 extends from the rear wall 110, opposite the first rail guide 106. The second rail guide 108 may generally define a C-shaped cross-sectional shape. For example, the second rail guide 108 may include a fifth support section 108a extending from the rear wall 110 in the third direction. The second rail guide 108 may further include a sixth support section 108b extending substantially perpendicular to the fifth support section 108a, and extending substantially parallel to the rear wall 110. A seventh support section 108c may extend from the sixth support section 108b, opposite the fifth support section 108a, in the fourth direction. Furthermore, an eighth support section 108d may extend from the seventh support section 108c, opposite the sixth support section 108b, in a direction that is substantially parallel to the sixth support section 108b and toward the fifth support section 108a.

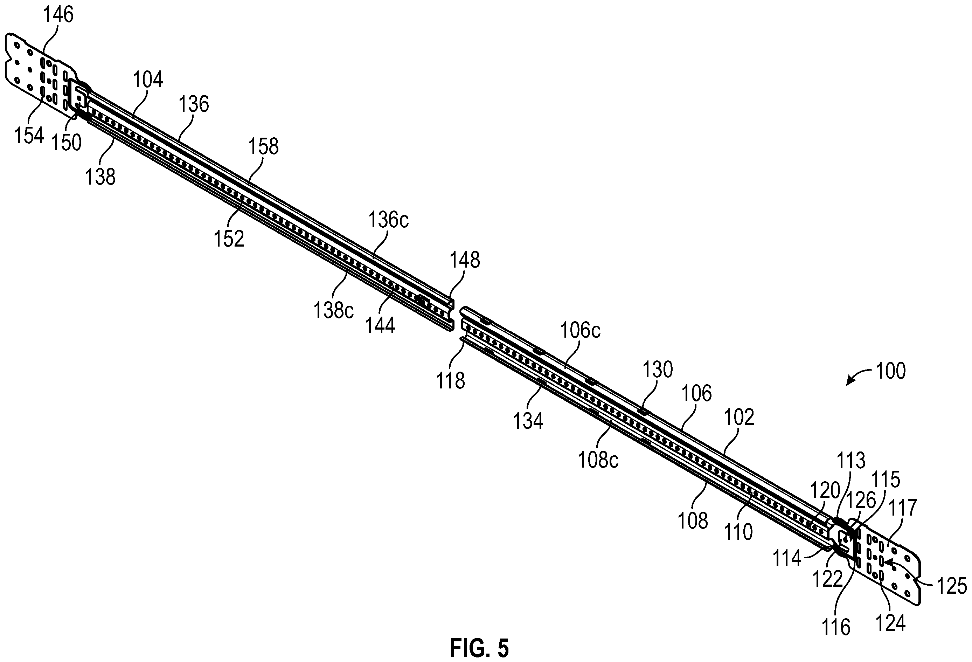

Referring to FIG. 5, in some examples, the cross-sectional shape of the first or second rail guides 106, 108 may be consistent along an entire length of the first or second rail guides 106, 108. In other examples, the cross-sectional shape of the first or second rail guides 106, 108 may be consistent along at least 50% the length of the first or second rail guide 106, 108. As described above, an angle between the first and second support section 106a, 106b, the second and third support section 106b, 106c, and the third and fourth support section 106c, 106d, may me about 90 degrees to provide for easy adjustability and notable structural rigidity. However, in other examples, the angle between the first and second support section 106a, 106b, or the second and third support section 106b, 106c, or the third and fourth support section 106c, 106d may be oblique. Similarly, the angle between adjacent support sections 108a-d of the second rail guide 108 may be about 90 degrees, or may be oblique.

In some examples, the mounting section 111 may include one or more of the first and second support sections 106a, 106b and the fifth and sixth support sections 108a, 108b. As described further below, any of the first, second, fifth, and sixth support sections 106a, 106b, 108a, 108b may contact and secure the electrical junction box 60 to the mounting bracket 100 (as shown in FIG. 9).

Referring again to FIG. 6, in some examples, a recessed channel 112 may be defined by (or between) the rail guides 106, 108 and by the rear wall 110 of the mounting section 111. The recessed channel 112 may extend from the rear wall 110 to a front side of the of the first and second rail guides 106, 108. For example, the recessed channel 112 may extend from the rear wall 110 to the second and sixth support sections 106b, 108b opposite the rear wall 110. Furthermore, the recessed channel 112 may further extend between the first and second rail guides 106, 108. For example, the recessed channel 112 may be defined between the first and fifth support sections 106a, 108a.

Referring again to FIG. 5, a plurality of first support rail mounting holes 120 are spaced apart along at least a portion of the rear wall 110 of the recessed channel 112. In some examples, the first support rail mounting holes 120 are equidistantly spaced along the rear wall 110. For example, adjacent first support rail mounting holes 120 may be spaced apart by a first spacing. Furthermore, each set of adjacent first support rail mounting holes 120 may be spaced apart by the first spacing. The plurality of first support rail mounting holes 120 are configured to receive known types of fasteners (e.g., screws 74 shown in FIGS. 7 through 9) to secure electrical components (e.g., the electrical junction box 60 shown in FIGS. 7 through 9) to the mounting section 111.

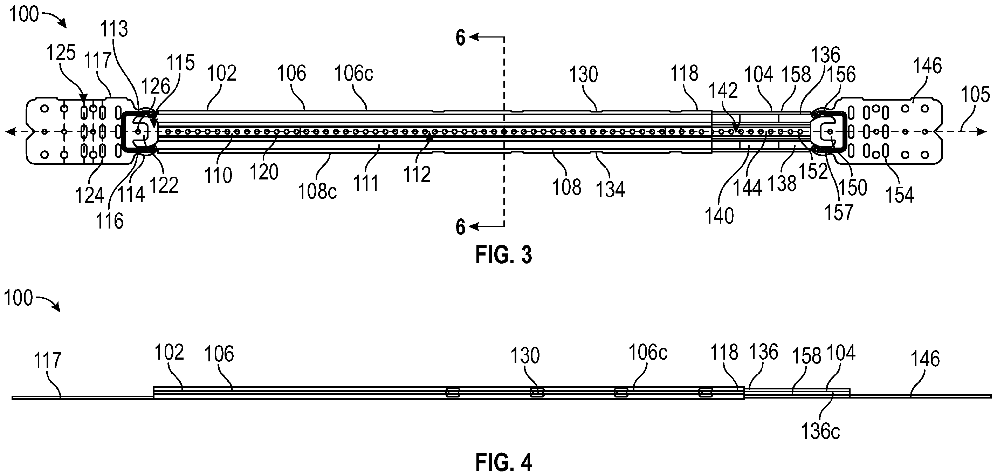

The first and second rail guides 106, 108 may extend in the first direction from a free end section 118 (e.g., a proximal end), to a distal end. In some examples, the first support rail 102 may include a structure mount 117 that extends from the first and second rail guides 106, 108. Specifically, the first support rail 102 extends from the distal end of the first and second rail guides 106, 108 in the first direction (e.g., a distal direction) to an end of the first support rail 102, opposite the free end section 118. In some examples, the structure mount 117 may be a flange. As described further below, the structure mount 117 may be a planar (or other) extension that is bendable to secure the first support rail 102 to a structural member at a variety of depths (e.g., the wall stud 50 as shown in FIG. 10). Furthermore, as illustrated in FIG. 3, the structural mount 117 may generally be rectangular. However, in other examples, the structural mount 117 may instead be circular, triangular, or any other relevant shape, and may further be rigid, partially rigid, or otherwise define relevant material properties.

Referring to FIG. 3, in some examples, the structure mount 117 may be connected to the first and second rail guides 106, 108 by one or more legs. For example, a first leg 113 may extend from the second support section 106b of the first rail guide 106, and a second leg 114 may extend from the sixth support section 108b of the second rail guide 108, spaced apart from the first leg 113, to connect the structure mount 117 to the rail guides 106, 108. Furthermore, an embossment 116 may extend along the first and second legs 113, 114 to provide rigidity and structural integrity to the connection between the rail guides 106, 108 and the structure mount 117.

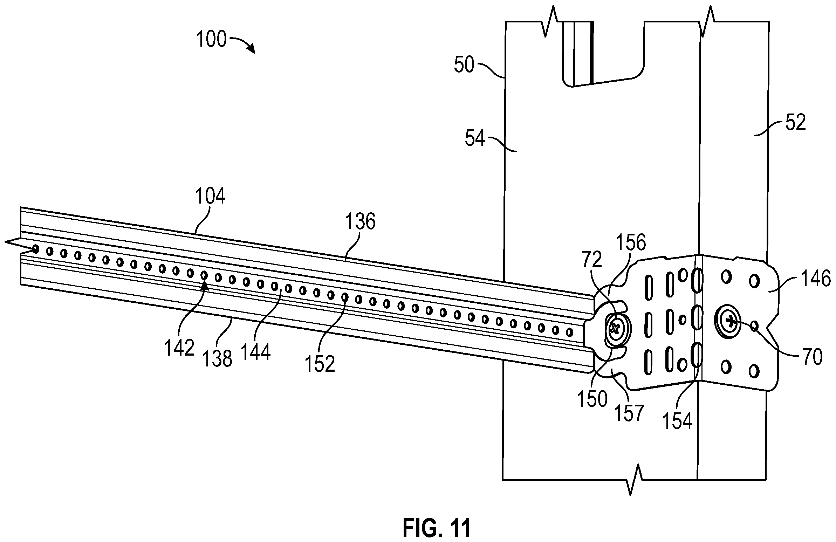

As described further below, the legs 113, 114 may be bent to allow the structure mount 117 to extend away from (e.g., substantially perpendicular to) the rail guides 106, 108, and thereby to ease securement of the structure mount 117 to the wall stud 50 (e.g., to a closed side 54, as shown in FIG. 11). In this regard, use of two legs (e.g., with reinforcement as shown) can help to appropriately balance strength with flexibility. In other examples, however, other configurations are possible.

Still referring to FIG. 3, in some examples, a mounting tab 122 extends from the structure mount 117 in the second direction, toward the rail guides 106, 108. For example, the mounting tab 122 may extend from the structure mount 117 through a gap 115 between the legs 113, 114. As illustrated in FIG. 3, a first section of the embossment 116 may extend along the first leg 113 and a second section of the embossment 116 may extend along the second leg 114. The first and second sections of the embossment 116 may be connected, such that the embossment 116 partially encompasses the gap 115, and therefore the mounting tab 122, to provide rigidity and strength to the structure mount 117. As described further below, the mounting tab 122 may be configured to receive a fastener to secure the structure mount 117, and thus the first support rail 102, to one of the wall studs 50.

In some examples, the structure mount 117 includes a plurality of sets of reliefs 124 about which an installer can bend the structure mount 117. Thus, for example, the structure mount 117 can be adjusted to be set back the mounting section 111 from a face 52 of the wall stud 50 at a variety of predetermined distances, e.g., depending on the in-wall spacing required to mount a specific mechanical component to the mounting bracket 100. As shown in the illustrated example, the reliefs 124 can be linearly arrayed to define corresponding bend lines 125. In different examples, the reliefs 124 may include a continuous score line or a discontinuous score line (e.g., a dashed score line or the like) that provide a weakened groove in the structure mount 117 along the bend lines 125. In other examples, the reliefs 124 may include one or more holes disposed along the bend lines 125, including circular holes, oblong holes, holes of various diameters, lengths, and sizes, as well as holes defining other relevant shapes. In some examples, the reliefs 124 can include U-shaped cut-outs disposed at either end of the bend line 125. In other examples, the reliefs 124 may otherwise include areas of weakened material that can be disposed along the bend lines 125 to ease manual (or other) adjustment of the structure mount 117.

Referring briefly to FIGS. 10 and 11, as described above, the structure mount 117 includes the plurality of sets of reliefs 124 that allow an installer to bend the structure mount 117 at a variety of predetermined locations based on a size of a desired mechanical component. For example, the bend lines 125 defined by the reliefs 124 may correspond to a predetermined mounting distance from a front face of the wall stud 50 (e.g., a mounting distance between the front face of the wall studs 50 and the mounting section 111 of the first rail 104) (as shown in FIG. 11). As such, the structure mount 117 can be bent at the bend line 125 of one set of the plurality of sets of reliefs 124 to mount an electrical box of a first depth, and the structure mount 117 can be bent at another set of the reliefs 124 to mount an electrical box of a second, different depth. Additionally, or alternatively, one set of the plurality of sets of reliefs 124 can be provided at a location on the structure mount 117 to locate the mounting section 111 in the middle of the depth of the wall stud 50. In another example, a set of the plurality of sets of reliefs 124 can be provided at a location on the structure mount 117 to place the mounting section 111 flush with the face of the wall stud 50. In other examples however, other structure mounts can be included, including mounts that include any variety of known structures to secure a bracket to a stud or other building member.

As noted above, in some scenarios an installer may bend the structure mount 117 to set back the mounting section 111 from the face of the wall stud 50 (e.g., at one of the bend lines 125, and at the connection between the legs 113, 114 and the rail guides 106, 108, as shown in FIG. 11). In these cases, the installer may secure the structure mount 117 to the face of the wall stud 50 with a fastener received through a hole in the structure mount 117. In some examples, the fastener may be received through one of the relief features 154 or may be received through a dedicated fastener opening.

Additionally or alternatively, in some cases, the installer can secure the structure mount 117 to a face of the closed side 54 of the wall stud 50 with a fastener received through a hole 126 in the mounting tab 122. As described above, the mounting tab 122 extends from the structure mount 117 back toward the rail guides 106, 108. Thus, the tab 122 and any corresponding fastener can provide a securement to the wall stud 50 that is spaced apart from a front of a stud and, correspondingly, more closely aligned with the rails 102, 104. In this regard, for example, securement of the structure mount 117 close to the first and second rail guides 106, 108 can add rigidity to the securement and removes the potential for twisting of the mounting bracket 100.

As illustrated in FIG. 1, the first rail guide 106 may include a first plurality of centering tabs 130 that extend from a top and bottom side of the first support rail 102. The first plurality of centering tabs 130 may extend integrally from the first rail guide 106 in an inward direction, specifically in a direction toward the second rail guide 108 or the recessed channel 112. As shown in the illustrated example, the first plurality of centering tabs 130 may extend from the third support section 106c of the first rail guide 106 toward the second rail guide 108.

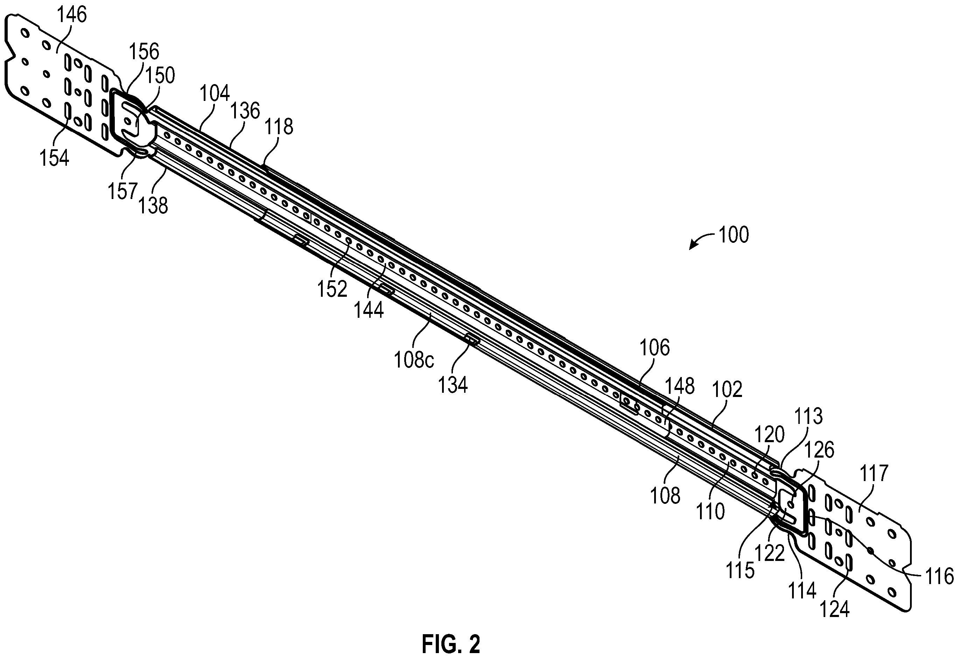

Furthermore, as illustrated in FIG. 2, the second rail guide 108 may include a second plurality of centering tabs 134 extending inward from the second rail guide 108, specifically in a direction toward the first rail guide 106 or the recessed channel 112. In particular, the second plurality of centering tabs 134 may extend from the seventh support section 108c of the second rail guide 108 toward the first rail guide 106.

As illustrated in FIG. 6, one or both sets of the centering tabs 130, 134 may bear against the second support rail 104 to bias the second support rail 104 toward a centered orientation (e.g., to be centered relative to an elongate centerline of the first support rail 102). Furthermore, the centering tabs 130, 134 may maintain a gap 135 between first support rail 102 and the second support rail 104, bridging the gap 135 to slidably engage the second support rail 104. In some examples, the centering tabs may provide the only points of contact between the first and second support rails 102, 104 and. correspondingly, the only structure that extends across the gap 135. In some examples, centering tabs can be alternately or additionally positioned at other locations with similar effect (e.g., can extend from the second support rail 104 to biasingly engage the first support rail 102).

Referring again to FIGS. 1-6, in some examples, the first support rail 102 and the second support rail 104 may generally include similar features, albeit with difference sizes in some cases to allow for telescopic nesting and movement, as further detailed below. In this regard, for example, the second support rail 104 may generally include similar components to the first support rail 104 including but not limited to a third rail guide 136, including first, second, third, and fourth support sections 136a-d, a fourth rail guide 138, including fifth, sixth, seventh, and eight support sections 138a-d, a rear wall 144, a recessed channel 142 defined by the rear wall 144 and the rail guides 136, 138, a free end section 148, a structure mount 146, including legs 156, 157, a mounting tab 150 and a plurality of reliefs 154, and a plurality of second support rail mounting holes 152 equidistantly spaced along the rear wall 144, including with a second spacing between adjacent second support rail mounting holes 152. Thus, discussion of first support rail 102 above also generally applies to similarly named components of the second support rail 1 104 (and vice versa).

In some ways, the first support rail 102 and the second support rail 104 may differ. For example, referring to FIG. 6, a cross-sectional profile or shape may be alternately sized or shaped to allow the first support rail 102 to nestably receive and partially encompass the second support rail 104. Accordingly, as illustrated in FIGS. 2 and 5, to join the first and second support rails 102, 104, the free end section 148 of the second support rail 104 is inserted into the free end section 118 of the first support rail 102. Specifically, the third rail guide 136 may be nested within the first rail guide 106, the fourth rail guide 138 may be nested within the second rail guide 108, and the recessed channel 142 may be nested within the recessed channel 112. The second support rail 104 can then be slidably moved within the first support rail 102, whereby the recessed channel 112 of the first support rail 102 is matingly received within the recessed channel 142 of the second support rail 104, with the rear wall 110 of the mounting section 140 of the second support rail 104 adjacent the rear wall 110 of the mounting section 111 of the first support rail 102. The first support rail 104 may then be slidably moved relative to the second support rail 104 to adjust an extension of the mounting bracket 100 to secure the mounting bracket 100 to adjacent wall studs 50 that are offset from one another by a variety of different distances.

As described above, the first and second pluralities of centering tabs 130, 134 are configured to contact the second support rail 104 and center the second support rail 104 within the first support rail 102. The first and second pluralities of centering tabs 130, 134 are flexible to allow for variations of dimensions along the length of the second support rail 104 to provide a consistent fit between the first and second support rails 102, 104. The first and second pluralities of centering tabs 130, 134 center the recessed channel 142 of the second support rail 102 within the recessed channel 112 of the first support rail 102 and define the spacing or gap 135 (shown in FIG. 6) between the first and second support rails 102, 104 to allow for relative translational movement therebetween with minimal points of contact (i.e., resistance). The maintained contact between the first and second support rails 102, 104 along a vertical direction - i.e., across the spacing or gap 135 from top to bottom or vice versa, as installed on a vertical stud - can be provided in some case only by the first and second pluralities of centering tabs 130, 134. This arrangement, for example, can reduce looseness between the support rails 102, 104 while also decreasing the potential for binding due to the support rails 102, 104 twisting relative to each other or due to excess frictional engagement between the rails 102, 104.

In some examples, the third rail guide 136 may include a third plurality of centering tabs extending outward from the third rail guide 136 in a direction that is away from the fourth rail guide 138. Specifically, the third plurality of centering tabs may extend from the third support section 106c of the third rail guide 106 toward the first support section 106a. Furthermore, the fourth rail guide 138 may include a fourth plurality of centering tabs extending outward from the fourth rail guide 138 in a direction away of the third rail guide 136. Specifically, the fourth plurality of centering tabs may extend from the seventh support section 108c of the fourth rail guide 108 toward the fifth support section 108a. In some examples, the centering tabs may bear against the first support rail 102 to bias the second support rail 104 toward a centered orientation. Furthermore, the centering tabs may maintain the gap 135 between first support rail 102 and the second support rail 104, bridging the gap 135 to slidably engage the first support rail 102.

In some implementations, devices or systems disclosed herein can be utilized or installed using methods embodying aspects of the disclosed technology. Correspondingly, description herein of particular features or capabilities of a device or system is generally intended to inherently include disclosure of a method of using such features for intended purposes and of implementing such capabilities. Similarly, express discussion of any method of using a particular device or system, unless otherwise indicated or limited, is intended to inherently include disclosure, as examples of the disclosed technology, of the utilized features and implemented capabilities of such device or system.

For example, with reference to FIGS. 10 and 11, some examples can include an installation method under which a user can install the mounting bracket 100. The method can include, adjusting an extension of the mounting bracket 100 by sliding the first support rail 102 relative to the second support rail 104. An extension of the mounting bracket 100 may be adjusted to align the support rails 102, 104 relative to an adjacent set of the walls studs 50. Furthermore, the support rails 102, 104 may be adjusted to selectively align one or more of the first support rail mounting holes 120 with one or more of the second support rail mounting holes 152. The structure mounts 117, 146 of the support rails 102, 104 may be bent at the legs 113, 114, 156, 157 and may further be selectively bent at a set of the reliefs 124, 154. A user may choose to selectively bend the structure mounts 117, 146 at one or more sets of the reliefs 124, 154 to determine an offset distance between the corresponding first or second support rail 102, 104 and a front face 52 of the corresponding wall studs 50. The structure mounts 117, 146 may be coupled to the front face 52 of the wall studs 50 by the fasteners 70 extending through one or more of the reliefs 124, or to the closed side 54 of the wall studs 50 by the fasteners 72 extending through the mounting tabs 122, 150.

With reference to FIGS. 7 through 9, some examples can include an installation method under which a user can install an electrical junction box (e.g., the electrical junction box 60) to the mounting bracket 100. For example, with the mounting bracket 100 secured to and extending between adjacent wall studs (e.g., the wall studs 50 shown in FIG. 10), the method can include placing a back wall 62 of the electrical junction box 60 against at least one of the mounting section 111 of the first support rail 102 or the mounting section 140 of the second support rail 104, aligning holes 64 in the back wall 62 of electrical junction box 60 with at least corresponding holes of the plurality of first support rail mounting holes 120 in the rear wall 110 of the recessed channel 112 of the first support rail 102 or holes of the plurality of second support rail mounting holes 152 in the rear wall 110 of the recessed channel 142 of the second support rail 104; inserting fasteners (e.g., screws 74) through the corresponding holes; and tightening the screws 74.

In the illustrated example, a single fastener or single line of fasteners can be extended through a corresponding single one of the mounting hole 120 or line of the mounting holes 120, in particular at a vertically centered location within the electrical junction box 60. The presently disclosed technology's improved stability relative to rotation, as further detailed below, can be particularly beneficial in this arrangement. In other examples, however, other arrangements of one or more fasteners are possible.

Conventionally, deforming or otherwise altering a shape of a junction box may be disfavored. However, the mounting bracket 100 may advantageously be configured to partially deform a wall of the junction box 60 during installation. This deformation can help to better secure the junction box 60 to the mounting bracket 100 by preventing rotation and wobble of the junction box 60 relative to the mounting bracket 100. For example, in some installations tightening the screws 74 that extend through the back wall 62 of the junction box 60 and an aligned set of the support rail mounting holes 120, 152 can partially deform the junction box 60 against the first and second support rails 102, 104.

In some examples, a portion of the back wall 62 of the junction box 60 can deform to the shape of the recessed channels 112, 142 of the respective first or second support rail 102, 104, such that the portion of the back wall 62 extends into one or both of the recessed channels 112, 142. For example, in FIG. 9, the back wall 62 is shown as deforming to the profile shape of the recessed channel 112 of the first support rail 102. Specifically, the back wall 62 may be deformed to engage the second and sixth support sections 106b, 108b of the rail guides 106, 108 of the first support rail 102, or to otherwise extend into the recessed channel 112 and the recessed channel 142. The deformed material of the electrical junction box 60 may engage the first support rail 104 and prevent movement (e.g., twisting or up or down movement) or loosening of the electrical junction box 60 relative to the mounting bracket 100. In some cases

In other examples, the junction box 60 may be coupled to one of the first and second support rails 102, 104 (e.g., but not the other rail 102, 104). Accordingly, the back wall 62 of the junction box 60 may in some cases deform to the profile shape of the recessed channel 112 of the first support rail 102 or the profile shape of the recessed channel 142 of the second support rail 104 (e.g., but not to profile shape of the other recessed channel 112, 142).

Thus, the disclosed technology can provide improved electrical assemblies, including to support electrical boxes or other components relative to studs or other building structures. In some examples, ease and security of installation can be improved in particular, including through intentional deformation of a secured component into a recessed channel or a mounting bracket, or through improved adjustability and structural integrity of a mounting bracket for particular installations.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the mounting bracket and/or electrical assembly described may be incorporated into/used in corresponding methods and vice versa.

Also as used herein, unless otherwise specified or limited, directional terms are presented only with regard to the particular example and perspective described. For example, reference to features or directions as "horizontal," "vertical," "front," "rear," "left," "right," "upper," "lower," and so on are generally made with reference to a particular figure or example and are not necessarily indicative of an absolute orientation or direction. However, relative directional terms for a particular example may generally apply to alternative orientations of that example. For example, "front" and "rear" directions or features (or "right" and "left" directions or features, and so on) may be generally understood to indicate relatively opposite directions or features for a particular example, regardless of the absolute orientation of the example (or relative orientation relative to environmental structures). "Lateral" and derivatives thereof generally indicate directions that are generally perpendicular to a vertical direction for a relevant reference frame.

Also as used herein, ordinal numbers are used for convenience of presentation only and are generally presented in an order that corresponds to the order in which particular features are introduced in the relevant discussion. Accordingly, for example, a "first" feature may not necessarily have any required structural or sequential relationship to a "second" feature, and so on. Further, similar features may be referred to in different portions of the discussion by different ordinal numbers. For example, a particular feature may be referred to in some discussion as a "first" feature, while a similar or substantially identical feature may be referred to in other discussion as a "third" feature, and so on.

Also as used herein, the use of "including," "comprising," or "having" and variations thereof is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of' (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

Also as used herein, unless otherwise limited or defined, "substantially identical" indicates that features or components are manufactured using the same processes according to the same design and the same specifications. In some cases, substantially identical features can be geometrically congruent.

Also as used herein, unless otherwise limited or defined, "integral" and derivatives thereof (e.g., "integrally") describe elements that are manufactured as a single piece without fasteners, adhesive, or the like to secure separate components together. For example, an element stamped, cast, or otherwise molded as a single-piece component from a single piece of sheet metal or using a single mold, without rivets, screws, or adhesive to hold separately formed pieces together is an integral (and integrally formed) element. In contrast, an element formed from multiple pieces that are separately formed initially then later connected together, is not an integral (or integrally formed) element.

Also as used herein, unless otherwise limited or defined, "substantially parallel" indicates a direction that is within ± 12 degrees of a reference direction (e.g., within ± 6 degrees or ± 3 degrees), inclusive. Similarly, unless otherwise limited or defined, "substantially perpendicular" similarly indicates a direction that is within ± 12 degrees of perpendicular a reference direction (e.g., within ± 6 degrees or ± 3 degrees), inclusive. Correspondingly, "substantially vertical" indicates a direction that is substantially parallel to the vertical direction, as defined relative to the reference system (e.g., a local direction of gravity, by default), with a similarly derived meaning for "substantially horizontal" (relative to the horizontal direction). Discussion of directions "transverse" to a reference direction indicate directions that are not substantially parallel to the reference direction. Correspondingly, some transverse directions may be perpendicular or substantially perpendicular to the relevant reference direction

In some implementations, devices or systems disclosed herein can be utilized, manufactured, or installed using methods embodying aspects of the disclosed technology. Correspondingly, any description herein of particular features, capabilities, or intended purposes of a device or system is generally intended to include disclosure of a method of using such devices for the intended purposes, of a method of otherwise implementing such capabilities, of a method of manufacturing relevant components of such a device or system (or the device or system as a whole), and of a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as examples of the disclosed technology, of the utilized features and implemented capabilities of such device or system.

The previous description of the disclosed examples is provided to enable any person skilled in the art to make or use the disclosed technology. Various modifications to these examples will be readily apparent to those skilled in the art, and the generic principles defined herein may be applied to other examples without departing from the spirit or scope of the disclosed technology. Thus, the disclosed technology is not intended to be limited to the examples shown herein but is to be accorded the widest scope consistent with the principles and novel features disclosed herein.

## Claims

1. A mounting bracket (100) for supporting an electrical component between structural supports, the mounting bracket (100) comprising:
a first support rail (102) with a first recessed channel (112); and
a second support rail (104) with a second recessed channel (142), the first and second support rails (102, 104) nested together for telescopic adjustment along a lateral direction, with the first recessed channel (112) nested within the second recessed channel (142);
one of the first support rail (102) or the second support rail (104) having centering tabs (130, 134) that extend to biasingly engage the other of the first or second support rails (102, 104) to maintain alignment of the first and second support rails (102, 104) with respect to each other, transverse to the lateral direction.

2. The mounting bracket (100) of claim 1, wherein a gap (135) is defined between the first and second support rails (102, 104) transverse to the lateral direction, with the centering tabs (130, 134) providing the only points of contact between the first and second support rails (102, 104) across the gap (135), and
optionally or preferably wherein the centering tabs (130, 134) bridge the gap (135) to slidably engage the other of the first or second support rails (102, 104).

3. The mounting bracket (100) of either of claims 1 or 2, wherein the first support rail (102) includes a first rail guide (106) and a second rail guide (108), and the first recessed channel (112) extends between the first rail guide (106) and the second rail guide (108), and
wherein the second support rail (104) includes a third rail guide (136) nested within the first rail guide (106) and a fourth rail guide (138) nested within the second rail guide (108), and the second recessed channel (142) extends between the third rail guide (136) and the fourth rail guide (138).

4. The mounting bracket (100) of claim 3, wherein the first and second rail guides (106, 108) include the centering tabs (130, 134) extending toward the third and fourth rail guides (136, 138), respectively, at least one of the centering tabs (130, 134) extending from the first rail guide (106) to bear against the third rail guide (136) and at least one of the centering tabs (130, 134) extending from the second rail guide (108) to bear against the fourth rail guide (138) to bias the first and second support rails (102, 104) toward a centered orientation,
optionally or preferably wherein the centering tabs (130, 134) are integrally formed with the first support rail (102).

5. The mounting bracket (100) of any of the preceding claims, wherein the first recessed channel (112) includes a first rear wall, the second recessed channel (142) includes a second rear wall, and mounting holes (120, 152) are arrayed along the first and second rear walls.

6. The mounting bracket (100) of claim 5, wherein the mounting holes (120, 152) of the first and second recessed channels (112, 142) are selectively alignable by telescopic movement of the first and second support rails (102, 104) to cooperatively receive fasteners that secure electrical components to the mounting bracket (100),

7. The mounting bracket (100) of claim 6, the first support rail mounting holes (120) are spaced along the first rear wall with a first spacing between adjacent first support rail mounting holes (120), and the second support rail mounting holes (152) are spaced along the second rear wall with a second spacing between adjacent second support rail mounting holes (152) that is equal to the first spacing.

8. The mounting bracket (100) of any of the preceding claims, wherein a structure mount (117, 146) extends in a respective distal direction from a distal end of each of the first and second support rails (102, 104) to secure the mounting bracket (100) to a corresponding support structure.

9. The mounting bracket (100) of claim 8, wherein a mounting tab (122) extends from each of the structure mounts (117, 146), opposite the respective distal direction, to receive a fastener to further secure the structure mount (117, 146) to a closed side of the corresponding structural support.

10. The mounting bracket (100) of either of claims 8 or 9, wherein each of the structure mounts (117, 146) includes sets of reliefs (124, 154) at which the structure mounts (117, 146) are bendable to set an offset of the corresponding first or second support rail (102, 104) from a front face of the corresponding structural support, and
optionally or preferably wherein the reliefs (124, 154) define bend lines, the bend lines corresponding to predetermined mounting distances from a front face of a first of the adjacent structural supports.

11. An electrical assembly comprising:
a mounting bracket (100) according to any of claims 1-10; and
an electrical box (60) having a rear wall (62) and being secured at a front side of the first support rail (102) with the rear wall (62) of the electrical box (60) deformed into the first and second recessed channels (112, 142) to secure the electrical box at the front side of the first support rail (102),
optionally or preferably wherein the rear wall (62) of the electrical box (60) is deformed into the first and second recessed channels (112, 142) by one or more fasteners that extend through one or more aligned set of the first and second support rail mounting holes (120, 152) to secure the electrical box (60) to the mounting bracket (100).

12. A method of supporting an electrical component, the method comprising:
telescopically adjusting a mounting bracket (100) in a lateral direction, with a first recessed channel (112) of a first support rail (102) of the mounting bracket (100) slidably nested within a second recessed channel (142) of a second support rail (104) of the mounting bracket (100);
securing the telescopically adjusted mounting bracket (100) to a building structure, with the first support rail (102) secured to a first structural support and the second support rail (104) secured to a second structural support; and
fastening an electrical component to the first and second support rails (102, 104) with a fastener so that the fastener deforms the electrical component into the first recessed channel (112) to resist rotation of the electrical component relative to the mounting bracket (100).

13. The method of claim 12, wherein centering tabs (130, 134) of the first or second support rail (102, 104) biasingly engage the other of the first or second support rail (102, 104) to maintain alignment of the first and second support rails (102, 104) with respect to each other, transverse to the lateral direction.

14. The method of either of claims 12 or 13, wherein the electrical component is an electrical box (60); and
wherein a rear wall (62) of the electrical box (60) is deformed by multiple fasteners into the first and second recessed channels (112, 142).

15. The method of any of claims 12 through 14, wherein securing the first support rail (102) to the first structural support includes bending the first support rail (102) to extend a structure mount (117) of the first support rail (102) in a first direction along the first structural support, with a mounting tab (122) extending from the structure mount (117) in a second direction along the first structural support, and securing the structure mount (117) to the first structural support,
optionally or preferably wherein the first structural mount is a building stud, and securing the first support rail (102) to the first structural support further includes inserting a fastener through the mounting tab (122) to engage a closed side of the building stud.
